(19)

Europäisches
Patentamt
European
Patent Office
Office européen
des brevets

(11) **EP 4 546 222 A1**

(12) **EUROPEAN PATENT APPLICATION**
published in accordance with Art. 153(4) EPC

(43) Date of publication:
**30.04.2025  Bulletin 2025/18**

(21) Application number: **23825924.6**

(22) Date of filing: **21.04.2023**

(51) International Patent Classification (IPC):
***G06N 10/20*** (2022.01)  ***G06N 10/40*** (2022.01)

(86) International application number:
**PCT/CN2023/089663**

(87) International publication number:
**WO 2023/246271 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **24.06.2022  CN 202210723073**

(71) Applicant: **Shenzhen International Quantum
Academy
Shenzhen, Guangdong 518045 (CN)**

(72) Inventors:
• **ZHONG, Youpeng
 Shenzhen, Guangdong 518045 (CN)**
• **LIU, Song
 Shenzhen, Guangdong 518045 (CN)**
• **YU, Dapeng
 Shenzhen, Guangdong 518045 (CN)**
• **NIU, Jingjing
 Shenzhen, Guangdong 518045 (CN)**
• **ZHANG, Libo
 Shenzhen, Guangdong 518045 (CN)**

(74) Representative: **Novagraaf International SA
Chemin de l'Echo 3
1213 Onex, Geneva (CH)**

(54) **SUPERCONDUCTING QUANTUM CHIP CONNECTION STRUCTURE, AND CONNECTION METHOD THEREOF**

(57)    The present disclosure relates to a superconducting quantum chip connection structure used for connecting between superconducting quantum chips. The superconducting quantum chips comprise quantum substrates and quantum circuits. The connection structure includes: a connection portion for connecting the superconducting quantum chips; and a current conversion portion disposed on the quantum substrate for bonding and connecting the quantum circuits to the connection portion, so that the standing wave current of the standing wave mode used for communication at the bonding connection interface is close to zero. The present disclosure can not only significantly reduce channel loss and achieve stronger coupling, but also significantly reduce energy loss at the bonding connection interface, thereby reducing the impact on quantum state transmission efficiency.

Fig. 1

EP 4 546 222 A1

## Description

### FIELD

The present disclosure relates to a connection structure and a connection method for superconducting quantum chips, and specifically relates to the technical field of superconducting quantum chip.

### BACKGROUND

As the technology of superconducting quantum chips gradually advances, the number of quantum bits integrated into superconducting quantum chips have been increasing significantly. However, limited by factors such as wafer area, yield, and control line fan-out, it is becoming increasingly difficult to integrate more quantum bits onto a single chip. To further integrate more superconducting quantum bits, it is possible to connect multiple superconducting quantum chips in a modular way to form a larger-scale distributed quantum processor. For interconnecting superconducting quantum chips, it is required to use low-loss channels to prevent decoherence. In this process, an appropriate connection method must be selected for reducing channel loss while achieving a stronger coupling.

Current technologies for interconnecting the superconducting quantum chips typically employ superconducting coaxial lines made of niobium-titanium alloy for bonding or crimping connections with the superconducting quantum chips. This connection method results in relatively high channel loss and low quality factors at the single-photon energy level (e.g., $5.1 \times 10^4$). Additionally, the capacitive coupling of crimping connections is relatively weak (e.g., around 1MHz). Furthermore, contact resistance at the interface of different metal bonding connections can also cause a certain amount of energy loss.

### SUMMARY

To address the aforementioned issues, the objective of the present disclosure is to provide a connection structure and a connection method for superconducting quantum chip that not only significantly reduces channel loss but also minimizes energy loss at the bonding connection interface.

To achieve this objective, the technical solutions proposed by the disclosure are shown as follows:

**First Aspect:** The disclosure provides a superconducting quantum chip connection structure for interconnecting superconducting quantum chips. The superconducting quantum chips comprise quantum substrates and quantum circuits. The connection structure includes:

> a connection portion used to connect the superconducting quantum chips,
> a current conversion portion mounted on the quantum substrates, wherein it is used to bond the quantum circuits and the connection portion, ensuring that the standing wave current of the communication standing wave mode at the bonding connection interface is close to zero.

For the superconducting quantum chip connection structure, the connection portion further employs a coplanar waveguide transmission line, which is situated on the superconducting quantum chips and comprises metal conductor strips and ground conductor strips. When different superconducting quantum chips are connected, the metal conductor strips and ground conductor strips on different superconducting quantum chips are correspondingly connected.

For the superconducting quantum chip connection structure,, the connection portion further employs an aluminum coaxial cable, comprising an inner conductor layer, an insulating layer, and an outer conductor layer, the inner conductor layer and an outer conductor layer are arranged coaxially. The inner conductor layer transmits high-level signals, while the outer conductor layer transmits low-level and serves as a shield. Both the inner and outer conductor layers are made of pure aluminum or aluminum alloy.

For the superconducting quantum chip connection structure, the connection structure further comprises a connector, including a first wire, a second wire, and a third connecting wire:

> the first connecting wire connects the ground layer of the quantum circuits to the outer conductor layer or ground conductor strip,
> the second connecting wire connects the current conversion portion to the inner conductor layer or metal conductor strip,
> the third connecting wire connects the ground layer of the quantum circuits to the outer conductor layer or ground conductor strip,

wherein the first connecting wire and the third connecting wire connect the ground layer of the quantum circuits to the outer conductor layer or ground conductor strip respectively, forming a common ground connection loop.

For the superconducting quantum chip connection structure, the current conversion portion further employs a coplanar waveguide transmission line mounted on the quantum chips.

For the superconducting quantum chip connection structure, further, when the coupling mode between the superconducting quantum bit and the channel is an inductive coupling, the current conversion portion adopts a quarter-wavelength coplanar waveguide transmission line to achieve coplanar waveguide impedance conversion effect;

When the coupling mode between the superconducting quantum bit and the channel is a capacitive coupling, the current conversion portion adopts a half-wavelength coplanar waveguide transmission line.

For the superconducting quantum chip connection structure, the connection structure further includes a coupler mounted on the superconducting quantum chips, one end of the coupler is connected to the quantum circuit, and the other end of the coupler is connected to the current conversion portion. The coupler is used to turn on or turn off the coupling strength between the quantum circuits and the standing wave mode, thereby controlling quantum state transmission between superconducting quantum chips.

**The Second Aspect:** The disclosure also provides a method for connecting superconducting quantum chips, comprising:

selecting the connection portion for connecting superconducting quantum chips,
selecting the current conversion portion based on the standing wave mode frequency and the coupling mode between superconducting quantum bits and channels,
bonding different superconducting quantum chips by using the selected connection portion,
bonding the current conversion portion to the coupler of the superconducting quantum chips and a bonding connection interface, such that the standing wave current of the standing wave mode used for communication at the bonding connection interface is close to zero.

The method for connecting superconducting quantum chips further comprises selecting an aluminum coaxial cable as the connection portion for connecting superconducting quantum chips, which comprises:

selecting pure aluminum or aluminum alloy as the material of the aluminum coaxial cable,
selecting the length of the aluminum coaxial cable based on the standing wave mode frequency and free spectral range.

The method for connecting superconducting quantum chips further comprises selecting a coplanar waveguide transmission line as the connection portion for connecting superconducting quantum chips.

The method for connecting superconducting quantum chips further comprises selecting the coplanar waveguide transmission line set on the superconducting quantum chips as the current conversion part.

Further, for the method for connecting superconducting quantum chips, when the coupling mode between the superconducting quantum bit and the channel is an inductive coupling, the current conversion portion adopts a quarter-wavelength coplanar waveguide transmission line to achieve coplanar waveguide impedance conversion effect; when the coupling mode between the superconducting quantum bit and the channel is a capacitive coupling, the current conversion portion adopts a half-wavelength coplanar waveguide transmission line.

Due to the adoption of the above technical solutions, the present disclosure has the following advantages:

1. The connection structure of the superconducting quantum chips proposed in the present disclosure can use an aluminum coaxial cable as the connection portion. By bonding the aluminum coaxial cable to the quantum circuit through a connector, an intrinsic quality factor of $1.2 \times 106$ can be achieved, which is tens of times higher than that of similar niobium-titanium alloy superconducting coaxial cables.
2. The bonding connection using the same aluminum material proposed in the present disclosure is stronger than the bonding connection between different metals in prior art, thereby significantly reducing channel loss and achieving stronger coupling.

In summary, the present disclosure can be widely used in the connection of superconducting quantum chips.

BRIEF DESCRIPTION OF THE DRAWINGS

Through a detailed reading of the preferred embodiment descriptions below, various other advantages and benefits will become clear to those skilled in the art. The accompanying drawings are solely for the purpose of illustrating the preferred embodiments and are not to be considered as limitations to the present disclosure. Throughout the drawings, the same reference numerals are used to denote the same components.

Figure 1 is a schematic diagram of the connection structure of two superconducting quantum chips in Embodiment 1 of the present disclosure;
Figure 2 is a schematic diagram of the superconducting quantum chip connection structure in Embodiment 1 of the present disclosure;
Figure 3 is a schematic diagram of the superconducting quantum chip connection structure in Embodiment 1 of the present disclosure;
Figure 4 is an effect diagram of the current conversion portion in Embodiment 1 of the present disclosure;
Figure 5 is a schematic diagram of the connection structure of two superconducting quantum chips in Embodiment 2 of the present disclosure;
Figure 6 is a flowchart of the superconducting quantum chip connection method in Embodiment 3 of the present disclosure.

DETAILED DESCRIPTION

It should be understood that the terminology used herein is for the purpose of describing particular example embodiments only and is not intended to be limiting. Unless otherwise specifically indicated in the context, the singular forms "a," "an," and "the" used herein may also encompass the plural forms. The terms "including," "containing," "having," and "with" are inclusive and, therefore, specify the presence of stated features, steps, operations, elements, and/or components, but do not preclude the presence or addition of one or more other features, steps, operations, elements, components, and/or groups thereof. The method steps, processes, and operations described herein are not to be construed as necessarily requiring their performance in the particular order discussed or illustrated, unless a specific order of performance is expressly indicated. It should also be understood that additional or alternative steps may be employed.

In this application, unless otherwise expressly defined or limited, terms such as "installed," "connected," "joined," "fixed," and the like should be broadly interpreted. For example, they can refer to both fixed and detachable connections, or integration; they can be mechanical or electrical connections; they can be direct connections or indirect connections through intermediate media; they can also represent internal communication or interaction between two elements, unless otherwise specifically defined. For persons of ordinary skill in the art, the specific meanings of these terms in this application can be understood based on specific circumstances.

Although terms such as "first," "second," "third," and the like may be used herein to describe multiple elements, components, regions, layers, and/or segments, these elements, components, regions, layers, and/or segments should not be limited by these terms. These terms may be used merely to distinguish one element, component, region, layer, or segment from another. Unless explicitly indicated in the context, terms such as "first," "second," and other numerical terms used herein do not imply any order or sequence. Therefore, the first element, component, region, layer, or segment discussed below can be referred to as a second element, component, region, layer, or segment without departing from the teachings of the example embodiments.

For ease of description, spatial relative terms may be used herein to describe the relationship between one element or feature and another element or feature as shown in the figures. These relative terms, such as "inside," "outside," "inner," "outer," "below," "above," and the like, are intended to encompass different orientations of the device in use or operation in addition to the orientations depicted in the figures.

In response to the issues of intrinsic channel loss and energy loss at the bonding connection interface in existing superconducting quantum chip connection technologies, the present disclosure provides a superconducting quantum chip connection structure and connection method for connecting superconducting quantum chips with quantum substrates and quantum circuits. The connection structure includes: a connection part for connecting superconducting quantum chips; and a current conversion part disposed on the quantum substrates for bonding the quantum circuits to the connection part, such that the standing wave current of the standing wave mode used for communication is close to zero at the bonding connection interface. Therefore, the present disclosure not only significantly reduces channel loss, achieving stronger coupling, but also significantly reduces energy loss at the bonding connection interface, thereby reducing the impact on quantum state transmission efficiency.

We will describe the below exemplary embodiments of the present disclosure in more detail with reference to the accompanying drawings. Although the exemplary embodiments of the present disclosure are shown in the drawings, it should be understood that the present disclosure can be implemented in various forms and should not be limited by the embodiments described herein. On the contrary, these embodiments are provided to enable a more thorough understanding of the present disclosure and to fully convey the scope of the present disclosure to those skilled in the art.

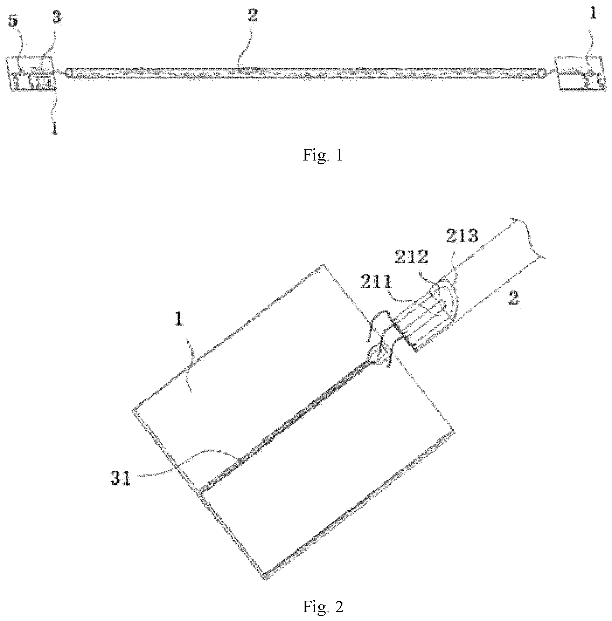

**Embodiment 1:** As shown in Figures 1 to 3, the superconducting quantum chip connection structure provided in this embodiment is used for connection between superconducting quantum chips 1. Each superconducting quantum chip 1 comprises a quantum substrate and a quantum circuit, the quantum circuit is integrated onto the quantum substrate. The superconducting quantum chip connection structure includes a connection portion 2 and a current conversion portion 3.

The connection portion 2 is used to connect different superconducting quantum chips 1.

The current conversion portion 3 is disposed on the quantum substrates and is used to connect the quantum circuit to the connection portion 2, ensuring that the standing wave current of the standing wave mode used for communication is close to zero at the bonding connection interface.

In a preferred embodiment, as shown in Figure 2, the connection portion 2 can adopt an aluminum coaxial cable 21. Taking the center of the aluminum coaxial cable 21 as the reference, the inward direction is towards the center, and the outward direction is away from the center. The aluminum coaxial cable 21 comprises, from inside to outside, an inner conductor layer 211, an insulating layer 212, and an outer conductor layer 213. The outer conductor layer 213 is coaxially arranged with the inner conductor layer 211. Both the inner conductor layer 211 and the outer conductor layer 213 are made of pure aluminum or aluminum alloy. The insulating layer 212 is wrapped around the outer side of the inner conductor layer 211, and the outer conductor layer 213 is wrapped around the outer side of the insulating layer 212.

The inner conductor layer 211 is used to transmit high-level, while the outer conductor layer 213 is used to transmit low-level and serves as a shield. In some implementations, the insulating layer 212 can be made of low-density polytetrafluoroethylene (ldPTFE).

The aluminum coaxial cable 21 fabricated in this embodiment can achieve an intrinsic quality factor as high as $1.2\times10^6$ under an extremely low temperature of approximately 10mK, at a frequency of approximately 5GHz, and at an extremely low power level of single photon energies. This is approximately two orders of magnitude higher than the intrinsic quality factor of niobium-titanium alloy superconducting coaxial cables. The aluminum coaxial cable 21 connects two superconducting quantum chips 1 at its two ends. When the aluminum coaxial cable 21 connecting the two superconducting quantum chips 1 is relatively short, such as within one meter, the channel is equivalent to a multi-mode resonant cavity, with a series of standing wave modes with equally spaced frequencies, its free spectral range is in the order of hundreds of megahertz. Due to the sufficiently large frequency spacing between different standing wave modes, communication can be carried out through one of the standing wave modes, with the influence of adjacent standing wave modes being minimal and negligible.

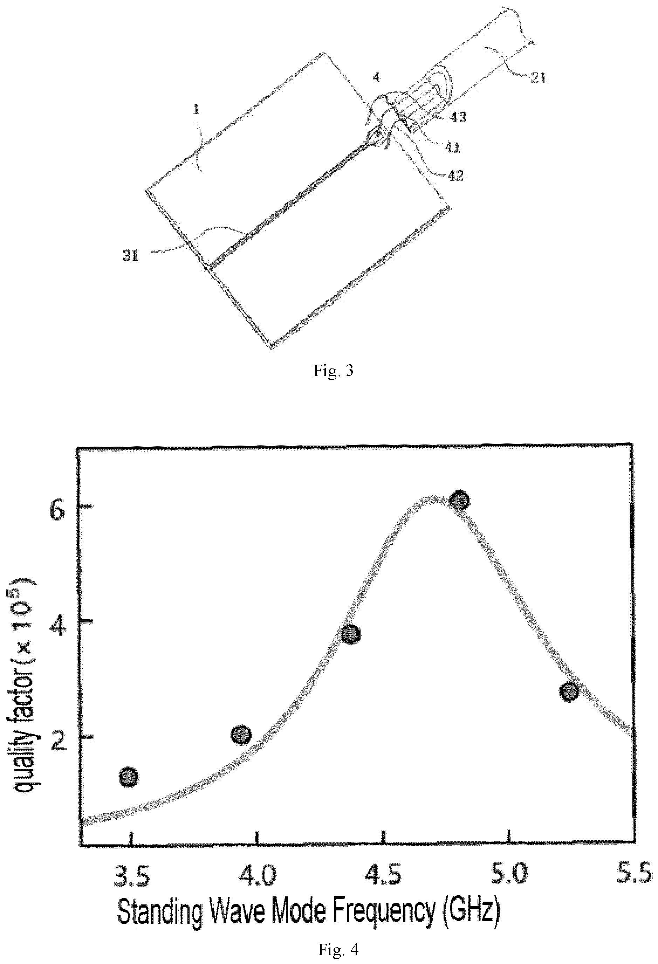

In a preferred embodiment, as shown in Figure 3, the superconducting quantum chip connection structure further includes a connector 4. One end of the connector 4 is connected to the aluminum coaxial cable 21, while the other end of the connector 4 is connected to one end of the current conversion portion 3, and the other end of the current conversion portion 3 is connected to the quantum circuits. Thus, this embodiment enables a bonded connection between the superconducting quantum chip 1 and the aluminum coaxial cable 21 through the use of the connector 4.

Furthermore, the connector 4 can be any metal connector, without limitation. The connector 4 comprises a first connecting wire 41, a second connecting wire 42, and a third connecting wire 43. The first connecting wire 41 connects the ground layer of the quantum circuits and the outer conductor layer 213; the second connecting wire 42 connects the current conversion portion 3 and the inner conductor layer 211; the third connecting wire 43 connects the ground layer of the quantum circuits and the outer conductor layer 213. The first connecting wire 41 and the third connecting wire 43 are respectively connected to the ground layer of the quantum circuits and the outer conductor layer 213, forming a common ground connection loop. Since the inner conductor layer 211 is made of pure aluminum or aluminum alloy, and the quantum circuits are typically made of aluminum, to facilitate an easier and more robust connection, the connector 4 in this embodiment can also be made of aluminum alloy. Therefore, a strong bonded connection can be easily formed between the aluminum coaxial cable 21 and the superconducting quantum chip 1 through the aluminum alloy connector 4.

In a preferred embodiment, as shown in Figure 1, a coupler 5 is also disposed on the superconducting quantum chip 1. One end of the coupler 5 is connected to the quantum circuits, and the other end of the coupler 5 is connected to the current conversion portion 3. The coupler 5 is used to turn on or off the coupling strength between the quantum circuits and the standing wave mode, thereby controlling the quantum state transmission between superconducting quantum chips. Without the coupler 5, the standing wave mode would continuously couple with the quantum circuits, causing interference. With the coupler 5, it can be turned off normally so that the standing wave mode does not interfere with the quantum circuits, and it can be turned on when cross-chip quantum state transmission is required.

In a preferred embodiment, the current conversion portion 3 can adopt a coplanar waveguide transmission line disposed on the quantum chips, serving the function of coplanar waveguide impedance conversion. As shown in Figure 2, a coplanar waveguide transmission line 31 is set on the quantum substrates, with one end of the coplanar waveguide transmission line 31 connected to the coupler 5 and the other end connected to the bonding joint of the connector 4.

Furthermore, when the coupling mode between the superconducting quantum bit and the channel is inductive coupling (which is characterized by minimal voltage and maximal current at the coupling point), a quarter-wavelength coplanar waveguide transmission line 31 can be employed. When the length of the coplanar waveguide transmission line exactly equals one-quarter of the wavelength and is connected between the coupler 5 and the bonding point, the coplanar waveguide transmission line acts as a quarter-wavelength transformer. The coplanar waveguide transmission line 31 is characterized by converting the high current and low voltage of inductive coupling into high voltage and low current. The length of the coplanar waveguide transmission line 31 is calculated based on the operating frequency, equal to one-quarter of the wavelength corresponding to the design frequency, and can be regarded as a quarter-wavelength ($\lambda/4$) impedance transformer. A quarter-wavelength coplanar waveguide impedance transformer is used to connect the coupler 5 and the bonding joint. The superconducting quantum chip 1 employs standing wave modes for quantum state transmission, allowing inter-chip quantum state transmission through one of the standing wave modes. When the wavelength of the standing wave mode is equal to four times the length of the current conversion portion 3 (i.e., a quarter-wavelength), the coplanar waveguide impedance transformation results in the standing wave current at the bonding connection interface approaching zero. This significantly reduces the resistance at the bonding connection interface, thereby reducing losses and subsequently minimizing the impact on quantum state transmission. As shown in Figure 4, at around 4.89 GHz, the wavelength of the standing wave mode equals four times the length of the coplanar waveguide impedance transformer, at which point its quality factor is the highest, reaching $6 \times 10^5$.

Furthermore, when the superconducting quantum bit and the channel are coupled through capacitance (characterized by extremely large voltage and extremely small current at the coupling point), the current conversion part 3 can adopt a coplanar waveguide transmission line with a half wavelength.

In a preferred embodiment, the superconducting quantum chip utilizes a superconducting circuit composed of Josephson junctions to realize a two-level system. The material used is aluminum, where the corresponding circuit shape is etched onto an aluminum film, which is then controlled by microwave signals. By applying the connecting part 2 and the current conversion part 3 of this embodiment to the superconducting quantum chips, it is possible to achieve a single-photon energy level quality factor of up to $8.1 \times 10^5$ for the superconducting quantum chip connection channel, improving by more than an order of magnitude compared to existing technologies. This reaches the level of frequency-tunable quantum bits on superconducting quantum chips and achieves quantum state transmission fidelity of over 99% across chips. Therefore, the quantum wiring of the aluminum-coated superconducting quantum chip 1, the connecting piece 4 of the aluminum alloy material, and the pure aluminum coaxial cable 21 form a connection of the same material, which is more conducive to achieving a bonded connection and also makes the bonded connection more robust.

In summary, through extensive experimental testing and continuous optimization of experimental parameters, this disclosure selects the use of pure aluminum coaxial cables to achieve connections between superconducting quantum chips. Since the superconducting quantum chip 1 works in an extremely low-temperature environment of approximately 10mK, and the superconducting transition temperature of aluminum is 1.2K, which is significantly higher than 10mK. At extremely low-temperature around 10mK, , within the frequency range of around 5GHz, and at extremely low power levels corresponding to single-photon energy levels, the aluminum coaxial cable can exhibit an intrinsic quality factor of up to $1.2 \times 10^6$, which is approximately two orders of magnitude higher than that of niobium-titanium alloy superconducting coaxial cables. Furthermore, both the quantum circuits and connectors of the superconducting quantum chips are made of aluminum, and the bonding connection between identical metals is more robust, which can significantly reduce channel loss and achieve stronger coupling.

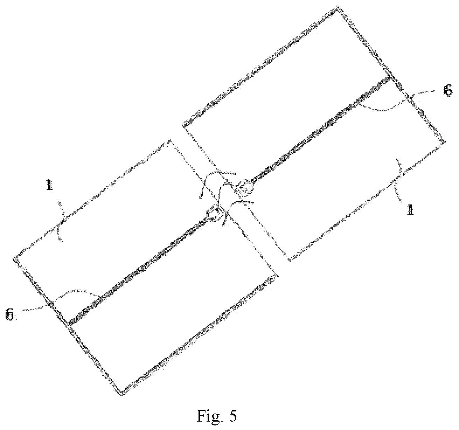

**Embodiment 2:** This embodiment 2 is largely the same as embodiment 1, with the primary difference being the use of a coplanar waveguide transmission line 6 for the connecting portion 2 of this embodiment, as shown in Figure 5. The coplanar waveguide transmission line 6 offers advantages such as small size, light weight, and a planar structure, making it convenient for achieving linear polarization, circular polarization, dual polarization, and multi-band operation. A coplanar waveguide transmission line 6 is formed on the superconducting quantum chips. The coplanar waveguide transmission line 6 comprises a dielectric substrate and three conductor strips: a metal conductor strip in the center, and two ground conductor strips on either side. When connecting two superconducting quantum chips 1, the metal conductor strips located on different superconducting quantum chips 1 are connected correspondingly, and the other two ground conductor strips located on different superconducting quantum chips are connected correspondingly.

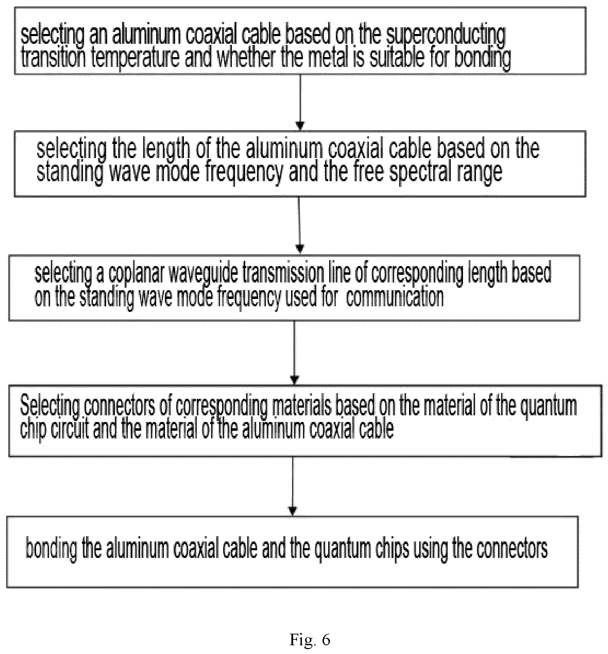

**Embodiment 3:** As shown in Figure 6, this embodiment also proposes a connection method for superconducting quantum chips, specifically using aluminum coaxial cables as an example for detailed description. The steps are shown as below.

S1, the connecting portion 2 is selected for connecting the superconducting quantum chip 1 based on the operating temperature of the superconducting quantum chips and the superconducting transition temperature of the metal,

S11, an aluminum coaxial cable is selected.

In the prior art, the superconducting coaxial cables made from niobium-titanium alloy have a superconducting transition temperature of up to 9.7K, allowing them to operate well in the liquid helium temperature range. However, actual superconducting quantum chips work in an extremely low temperature environment of around 10mK, far below the liquid helium temperature range. Therefore, based on the lower superconducting transition temperature, it is necessary to select a suitable material for the connecting portion to make the bonding connection easier to achieve and more robust.

Specifically, this embodiment employs aluminum coaxial cables. Due to the fact that aluminum has a superconducting transition temperature of 1.2K, which is significantly higher than 10mK. At extremely low temperatures around 10mK, at frequency around 5GHz, and at extremely low power levels of the single-photon energy scale, superconducting coaxial cables made from pure aluminum exhibit an intrinsic quality factor of up to $1.2 \times 10^6$,which is far superior to superconducting coaxial cables made from niobium-titanium alloy. Furthermore, since the quantum circuit of the superconducting quantum chip is made of aluminum, the selection of aluminum coaxial cables facilitates better connection between the same material.

S12, the length of the aluminum coaxial cable 21 is selected based on frequency and the free spectral range of the standing wave mode;

Specifically, the superconducting quantum chip 1 employs a standing wave mode for transmitting quantum states. The length L of the aluminum coaxial cable 21 is determined based on the frequency and free spectral range of the standing wave mode. The length L of the aluminum coaxial cable 21 should be an integer multiple of half the wavelength of the standing wave mode,

$$L = \frac{N}{2}\lambda$$

, wherein N is an integer. The speed of light is divided by the frequency of the standing wave mode to attain the wavelength of the standing wave modes:

$$\lambda = \frac{c}{f},$$

, wherein f is the frequency; c represents the speed of propagation of electromagnetic waves within the aluminum coaxial cable. Therefore, $L = \frac{N}{2}\frac{c}{f}$ .

Therefore, an appropriate integer N needs to be selected to determine the length L of the coaxial cable, yielding the formula: $f = \frac{N}{2}\frac{c}{L}$ ;the frequency difference between adjacent standing wave modes, also known as the free spectral range shown in formula :

$$\Delta f = \frac{1}{2}\frac{c}{L} = \frac{f}{N}$$ ; for example, if the frequency f is about 5GHz, N is about 10 , it would yield Δf being about 500MHz, and L being about 0.2m. This example is provided for illustration and is not limiting; the actual values can be determined based on specific requirements.

S13, the connectors of the corresponding material is selected based on the material of the superconducting quantum chip circuit and the aluminum coaxial cable.

Specifically, since the material of the superconducting quantum chip circuit is aluminum and the coaxial cable is also made of pure aluminum, selecting aluminum alloy as the material for connector 4 can facilitate easier and more secure connections.

S2, the current conversion portion 3 is selected based on the standing wave mode frequency used for communication and the coupling mode between the superconducting quantum bit and the channel.

Specifically, since the coupling mode between the superconducting quantum bit and the channel in this embodiment is an inductive coupling, a coplanar waveguide transmission line of corresponding length is selected to achieve impedance transformation. Based on the standing wave mode frequency used for communication, when the wavelength of the standing wave mode for communication is equal to four times of the length of the coplanar waveguide transmission line, this coplanar waveguide transmission line makes the standing wave current of the standing wave mode for communication at the bonding connection interface close to zero, thereby significantly reducing the loss caused by the resistance at the bonding connection interface, and further reducing the impact of the loss at the bonding connection interface on the transmission of quantum states.

S3, the aluminum coaxial cable 21 and the superconducting quantum chips are bonded by using the connector 4.

Specifically, the aluminum coaxial cable 21 and the superconducting quantum chips are bonded by using the connector 4. Since aluminum is highly suitable for bonding connections, the coaxial cable and superconducting quantum chips of the same material can easily form a robust bond under the action of the aluminum connector. The resistance at the bonding connection interface of the aluminum alloy connector is an order of magnitude lower than that of a niobium-titanium alloy interface. Furthermore, in addition to a stronger bonding connection, this also reduces the resulting channel loss.

Furthermore, the coplanar waveguide transmission line 31 is connected to the coupler 5 and the second connecting wire 42 of the connector 4. Specifically, a quarter-wavelength coplanar waveguide transmission line 31 is connected to the coupler 5 and the second connecting wire 42, which is then connected to the inner conductor layer 211 of the aluminum coaxial cable 21.

To further minimize loss, the target loss at the bonding connection interface is set to zero loss. This application employs standing wave mode for quantum state transmission, using one of the standing wave modes for inter-chip quantum state transmission. A quarter-wavelength (λ/4) coplanar waveguide transmission line 13 is connected between the coupler 5 and the bonding connection interface. When the wavelength of the standing wave mode is equal to four times of the length of the coplanar waveguide transmission line, the standing wave current of the standing wave mode for communication at the bonding connection interface is close to zero, achieving the target loss and thereby significantly reducing the loss caused by resistance at the bonding connection interface.

In summary, the superconducting quantum chip connection structure and connection method proposed in this disclosure achieve an intrinsic quality factor of up to $1.2 \times 10^6$, which is dozens of times higher than that of the same type of niobium-titanium alloy superconducting coaxial cable. Meanwhile, the use of the same material is more conducive to achieving a stronger bonding connection, which can significantly reduce channel loss and thereby enable stronger coupling. Additionally, when the wavelength of the standing wave mode is equal to four times of the length of the impedance converter section, it can reduce the loss at the bonding connection interface, minimizing the impact on quantum state transmission. This method addresses the issues of channel loss and energy loss at the bonding connection interface in existing superconducting quantum chip connection technologies.

The embodiments in this specification are described in a progressive manner, and the same or similar parts among different embodiments can be mutually referenced. Each embodiment focuses on highlighting the differences from other embodiments. In the description of this specification, the descriptive terms such as "one embodiment", "some implementations", etc., refer to the specific features, structures, materials, or characteristics described in conjunction with that embodiment or example being included in at least one embodiment or example of the embodiments of this specification. In this specification, the illustrative expressions of the above terms do not necessarily refer to the same embodiment or example. Moreover, the specific features, structures, materials, or characteristics described can be combined in a suitable manner in any one or more embodiments or examples. Furthermore, technical personnel in the field can combine and mix different embodiments or examples described in this specification, as well as the features of different embodiments or examples, provided that they do not contradict each other.

Finally, it should be noted that the above embodiments are merely used to illustrate the technical solutions of the present disclosure and are not intended to limit them. Although the present disclosure has been described in detail with reference to the foregoing embodiments, ordinary technical personnel in the field should understand that they can still modify the technical solutions recorded in the foregoing embodiments or replace some of the technical features with equivalent ones. These modifications or replacements do not deviate from the spirit and scope of the technical solutions of the embodiments of the present disclosure.

**Claims**

1. A connection structure for superconducting quantum chips, is used for interconnecting the superconducting quantum chips, each of the superconducting quantum chips comprise a quantum substrate and a quantum circuit, wherein the connection structure comprises:

   a connecting portion for connecting the superconducting quantum chips;
   a current conversion portion disposed on the quantum substrate for bonding the quantum circuit to the connecting portion, such that a standing wave current of a standing wave mode for communication at a bonding connection interface is close to zero.

2. The connection structure for superconducting quantum chips according to claim 1, wherein the connecting portion employs a coplanar waveguide transmission line disposed on the superconducting quantum chips, the coplanar waveguide transmission line comprises a metal conductor strip and a ground conductor strip, when different superconducting quantum chips are connected, metal conductor strips on different superconducting quantum chips are connected accordingly, and two ground conductor strips are connected accordingly.

3. The connection structure for superconducting quantum chips according to claim 2, wherein the connecting portion employs an aluminum coaxial cable, which sequentially comprises an inner conductor layer, an insulating layer, and an outer conductor layer from inside to outside, the outer conductor layer is coaxially arranged with the inner conductor layer, the inner conductor layer is used to transmit a high level, and the outer conductor layer is used to transmit a low level while being used to provide shielding, wherein both the inner conductor layer and the outer conductor layer are made of pure aluminum or aluminum alloy.

4. The connection structure for superconducting quantum chips according to claim 2 or 3, wherein the connection structure further comprises a connector comprising a first connecting wire, a second connecting wire, and a third connecting wire,

   the first connecting wire connects a ground layer of the quantum circuit to the outer conductor layer or the ground conductor strip,
   the second connecting wire connects the current conversion portion to the inner conductor layer or the metal conductor strip,
   the third connecting wire connects the ground layer of the quantum circuit to the outer conductor layer or the ground conductor strip,
   wherein the first connecting wire and the third connecting wire respectively connect the ground layer of the quantum circuit and the outer conductor layer or the ground conductor strip, forming a common ground connection loop.

5. The connection structure for superconducting quantum chips according to any one of claims 1 to 3, wherein the current conversion portion employs a coplanar waveguide transmission line disposed on the superconducting quantum chips.

6. The connection structure for superconducting quantum chips according to claim 5, wherein

   when a coupling mode between a superconducting quantum bit and a channel is an inductive coupling, the current conversion portion employs a quarter-wave coplanar waveguide transmission line to achieve coplanar waveguide impedance conversion effect; and
   when the coupling mode between the superconducting quantum bit and the channel is a capacitive coupling, the current conversion portion employs a half-wave coplanar waveguide transmission line.

7. The connection structure for superconducting quantum chips according to any one of claims 1 to 3, wherein the connection structure further comprises a coupler disposed on the superconducting quantum chip, one end of the coupler is connected to the quantum circuit, and the other end of the coupler is connected to the current conversion portion, the coupler is used to turn on or turn off a coupling strength between the quantum circuit and the standing wave mode, thereby controlling a quantum state transmission between superconducting quantum chips.

8. A connection method for superconducting quantum chips, comprising:

selecting a connecting portion for connecting superconducting quantum chips;
selecting a current conversion portion based on a frequency of a standing wave mode for communication and a coupling mode between a superconducting quantum bit and a channel;
bonding different superconducting quantum chips with the connecting portion;
bonding the current conversion portion to the quantum circuit of the superconducting quantum chips and a bonding connection interface, such that a standing wave current of the standing wave mode for communication at the bonding connection interface is close to zero.

9. The connection method for superconducting quantum chips according to claim 8, wherein selecting an aluminum coaxial cable as the connecting portion for connecting superconducting quantum chips, comprises:

selecting pure aluminum or aluminum alloy as material of the aluminum coaxial cable;
selecting a length of the aluminum coaxial cable based on the frequency and a free spectral range of the standing wave mode.

10. The connection method for superconducting quantum chips according to claim 8, wherein selecting a coplanar waveguide transmission line as the connecting portion for connecting superconducting quantum chips.

11. The connection method for superconducting quantum chips according to any one of claims 8 to 10, wherein selecting a coplanar waveguide transmission line disposed on the superconducting quantum chip as the current conversion portion.

12. The connection method for superconducting quantum chips according to claim 11, wherein when the coupling mode between the superconducting quantum bit and the channel is an inductive coupling, the current conversion portion employs a quarter-wavelength coplanar waveguide transmission line to achieve a coplanar waveguide impedance conversion effect; when the coupling mode between the superconducting quantum bit and the channel is a capacitive coupling, the current conversion portion employs a half-wavelength coplanar waveguide transmission line.

Fig. 1

Fig. 2

Fig. 3

Fig. 4

Fig. 5

selecting an aluminum coaxial cable based on the superconducting transition temperature and whether the metal is suitable for bonding

selecting the length of the aluminum coaxial cable based on the standing wave mode frequency and the free spectral range

selecting a coplanar waveguide transmission line of corresponding length based on the standing wave mode frequency used for communication

Selecting connectors of corresponding materials based on the material of the quantum chip circuit and the material of the aluminum coaxial cable

bonding the aluminum coaxial cable and the quantum chips using the connectors

Fig. 6

**INTERNATIONAL SEARCH REPORT**

| International application No. |
| --- |
| **PCT/CN2023/089663** |

**A. CLASSIFICATION OF SUBJECT MATTER**

G06N10/20(2022.01)i; G06N10/40(2022.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNTXT, ENTXTC, ENTXT, IEEE, CNKI: 超导, 量子, 计算, 位元, 比特, 约瑟夫森, 约瑟芬森, 电容, 电感, 耦合, 四分之一, 二分之一, 半波长, 1/4, 1/2, 波长, 频率, 驻波, 电压, 电流, 零, 0, 铝, Al, 共面, 波导, 传输, CPW, 同轴, 电缆, 线缆, superconduct+, quantum, bit+, Josephson, capacit+, induct+, quarter, half, wave, length, frequency, voltage, current, zero, aluminum, coplanar, guid+, cable, coaxial, stand+

**C. DOCUMENTS CONSIDERED TO BE RELEVANT**

| Category* | Citation of document, with indication, where appropriate, of the relevant passages | Relevant to claim No. |
| --- | --- | --- |
| PX | CN 115204402 A (SHENZHEN INTERNATIONAL QUANTUM ACADEMY) 18 October 2022 (2022-10-18)<br>claims 1-12, and description, paragraphs [0001]-[0078], and figures 1-6 | 1-12 |
| Y | CN 113537500 A (SAMSUNG ELECTRONICS CO., LTD.) 22 October 2021 (2021-10-22)<br>description, paragraphs [0068]-[0112], and figures 1-8 | 1-12 |
| Y | CN 110277969 A (HEFEI ORIGIN QUANTUM COMPUTING TECHNOLOGY CO., LTD.) 24 September 2019 (2019-09-24)<br>claims 1-11, and description, paragraphs [0002]-[0004], [0030] and [0060]-[0068], and figures 1-3 | 1-12 |
| Y | CN 112074945 A (INTERNATIONAL BUSINESS MACHINES CORP.) 11 December 2020 (2020-12-11)<br>claims 1-25, and description, paragraphs [0001]-[0003] and [0025]-[0045], and figures 1-3 and 5-6 | 3, 9 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **06 June 2023** | **12 June 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/089663** |

## C. DOCUMENTS CONSIDERED TO BE RELEVANT

| Category* | Citation of document, with indication, where appropriate, of the relevant passages | Relevant to claim No. |
|---|---|---|
| Y | CN 112561067 A (SOUTH CHINA NORMAL UNIVERSITY) 26 March 2021 (2021-03-26) claims 1-10, and description, paragraphs [0044]-[0073], and figure 1 | 7 |
| A | CN 113242027 A (NANJING UNIVERSITY) 10 August 2021 (2021-08-10) entire document | 1-12 |
| A | CN 113394535 A (SHANDONG INSPUR SCIENCE RESEARCH INSTITUTE CO., LTD.) 14 September 2021 (2021-09-14) entire document | 1-12 |
| A | JP S63290979 A (FUJITSU LIMITED) 28 November 1988 (1988-11-28) entire document | 1-12 |

Form PCT/ISA/210 (second sheet) (July 2022)

<table>
<tr><td colspan="2" align="center">INTERNATIONAL SEARCH REPORT<br>Information on patent family members</td><td colspan="2">International application No.<br><br>**PCT/CN2023/089663**</td></tr>
</table>

| Patent document<br>cited in search report | | | Publication date<br>(day/month/year) | Patent family member(s) | | | Publication date<br>(day/month/year) |
|---|---|---|---|---|---|---|---|
| CN | 115204402 | A | 18 October 2022 | None | | | |
| CN | 113537500 | A | 22 October 2021 | US | 2021328127 | A1 | 21 October 2021 |
| | | | | EP | 3910562 | A1 | 17 November 2021 |
| | | | | KR | 20210128787 | A | 27 October 2021 |
| CN | 110277969 | A | 24 September 2019 | CN | 210327515 | U | 14 April 2020 |
| CN | 112074945 | A | 11 December 2020 | EP | 3815134 | A1 | 05 May 2021 |
| | | | | WO | 2020002000 | A1 | 02 January 2020 |
| | | | | US | 2020006832 | A1 | 02 January 2020 |
| | | | | US | 10833384 | B2 | 10 November 2020 |
| | | | | JP | 2021528840 | A | 21 October 2021 |
| CN | 112561067 | A | 26 March 2021 | WO | 2021190349 | A1 | 30 September 2021 |
| | | | | US | 2022222565 | A1 | 14 July 2022 |
| | | | | CN | 112561067 | B | 15 November 2022 |
| CN | 113242027 | A | 10 August 2021 | None | | | |
| CN | 113394535 | A | 14 September 2021 | None | | | |
| JP | S63290979 | A | 28 November 1988 | JPH | 0785104 | B2 | 13 September 1995 |

Form PCT/ISA/210 (patent family annex) (July 2022)